# EUROPÄISCHE PATENTSCHRIFT

(11) **EP 2 445 943 B1**
(45) Veröffentlichungstag und Bekanntmachung des Hinweises auf die Patenterteilung: **12.06.2013**
(21) Anmeldenummer: 10792904.4
(22) Anmeldetag: 15.12.2010
(51) Int. Cl.: C08F 220/18, C08F 2/22, B65D 75/58, C09D 133/08

(54) **KALTGESIEGELTE, WIEDERVERSCHLIESSBARE VERPACKUNG UND ZUSAMMENSETZUNG ZU DEREN HERSTELLUNG**
COLD SEALED RECLOSEABLE PACKAGING AND COMPOSITION FOR THE PRODUCTION THEREOF
EMBALLAGE REFERMABLE SCELLÉ À FROID ET COMPOSITION POUR LE PRODUIRE

(30) Priorität: 18.12.2009 EP 09179949
(43) Veröffentlichungstag der Anmeldung: 02.05.2012
(73) Patentinhaber: BASF SE, 67056 Ludwigshafen (DE)
(72) Erfinder: SCHUMACHER, Karl-Heinz, 67433 Neustadt (DE); BÜSCH, Florian, 67346 Speyer (DE); URBAN, Dieter, 67346 Speyer (DE); BEYERS, Cornelis Petrus, 67122 Altrip (DE)
(86) Internationale Anmeldenummer: PCT/EP2010/069682
(87) Internationale Veröffentlichungsnummer: WO 2011/073221

(56) Entgegenhaltungen:
- EP-A1- 1 939 106
- WO-A1-2007/125126
- US-A- 4 721 748

## Beschreibung

Die Erfindung betrifft eine wiederverschließbare Verpackung mit einer kaltgesiegelten, nach Öffnen der Verpackung wiederverschließbaren Klebstoffschicht, ein Verfahren zur Herstellung der Verpackung, eine Zusammensetzung in Form einer wässrigen Polymerdispersion zur Herstellung der Verpackung sowie eine mit der Zusammensetzung beschichtete Polymerfolie.

Kaltsiegelbare Zusammensetzungen sind Haftmittel, die sich nach Aufbringen und Trocknen auf einem Substrat nicht klebrig anfühlen, die aber aneinander haften, wenn sie bei Raumtemperatur mit Druck aneinander gepresst werden. Sie unterscheiden sich von Haftklebstoffen durch ihre bei Raumtemperatur fehlende oder allenfalls sehr geringe Klebrigkeit. Sie unterscheiden sich von heißsiegelbaren Zusammensetzungen dadurch, dass sie ohne Wärmeaktivierung miteinander unter Druck verklebbar sind. Kaltsiegelbare Zusammensetzungen sind bekannt, beispielsweise zum Verschließen von beutelförmigen Verpackungen, insbesondere für Lebensmittel oder andere wärmeempfindliche Güter, bei deren Verpackung die Anwendung von Wärme unerwünscht ist wie z.B. Eiscreme oder Schokolade oder wenn schnelle Verpackungsgeschwindigkeiten und hohe Taktzahlen gefordert werden. Wegen ihrer nicht-klebrigen Eigenschaften können damit beschichtete Substrate auf Rollen gerollt und bis zur Anwendung gelagert werden, ohne Haftung an der gegenüberliegenden, vorzugsweise mit einer Releasebeschichtung versehenen anderen Seite des Trägersubstrats. Typischerweise werden für Kaltsiegelklebstoffe Polymerdispersionen basierend auf Naturkautschuklatex verwendet. Nachteilig ist hierbei eine vergleichweise hohe Preisvolatilität, natürliche Qualitätsschwankungen des natürlichen Rohstoffs und vor allem das allergene Potential, welches diese Naturprodukte bergen. Gewünscht werden kaltsiegelbare Zusammensetzungen, die möglichst frei sind von organischen Lösungsmitteln, d.h. wässrige Dispersionen von Polymeren, die nach dem Trocknen eine kaltsiegelbare Beschichtung bilden.

Für eine mehrmalige Wiederverschließbarkeit einer Verpackung ist es von Bedeutung, dass die Verschlusskräfte auch nach mehrmaligem Öffnen noch ausreichend hoch sind. Polymerdispersionen auf Basis von Naturkautschuk oder auf Basis von synthetischen Polymeren weisen häufig nicht gleichzeitig alle für die Herstellung von wiederverschließbaren Verpackungen gewünschten Eigenschaften auf hinsichtlich ausreichend hoher Siegelnahtfestigkeit beim Erstverschluss, Blockfestigkeit gegen eine Releasebeschichtung sowie ausreichend hohen Wiederverschlusskräften nach mehrmaligem Öffnen und Wiederverschließen einer Verpackung.

In der EP 1939106 A werden kaltgesiegelte, wiederverschließbare Verpackungen beschrieben. Mit den darin genannten Naturlatices und synthetischen Polymeren wie z.B. Acrylatpolymeren und Acrylat/Styrol Copolymeren sind die gewünschten Werte für die Erstöffnungskräfte und für die Wiederverschlusskräfte nicht ohne weiteres zu erreichen.

Der Erfindung liegt die Aufgabe zugrunde, Zusammensetzungen für die Herstellung von kaltsiegelbaren Folien und mit diesen Folien herstellbaren wiederverschließbaren Verpackungen zur Verfügung zu stellen, welche eine Kombination von positiven Eigenschaften hinsichtlich Kaltsiegelbarkeit, Blockfestigkeit und Wiederverschließbarkeit möglichst gut miteinander vereinen und außerdem möglichst frei von allergenem Potential und organischen Lösungsmitteln sind und möglichst gut durch übliche Auftragetechniken (wie z.B. Bedrucken) auftragbar sind, insbesondere auf Foliensubstraten.

Die Aufgabe wird erfindungsgemäß gelöst durch eine wiederverschließbare Verpackung mit einer kaltgesiegelten, nach Öffnen der Verpackung wiederverschließbaren Klebstoffschicht, wobei die Klebstoffschicht ein Emulsionspolymerisat enthält, welches zu mindestens 60 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren, wobei das Emulsionspolymerisat herstellbar ist durch Emulsionspolymerisation von radikalisch polymerisierbaren Monomeren in Gegenwart mindestens eines Schutzkolloids und eine Glasübergangstemperatur im Bereich von -30 bis 0 °C aufweist. Die das Emulsionspolymerisat enthaltende Klebstoffschicht kann hergestellt werden durch Beschichtung eines geeigneten Verpackungssubstrats mit einer das Emulsionspolymerisat enthaltenden Zusammensetzung in Form einer wässrigen Polymerdispersion.

Kaltsiegelbar bedeutet, dass wenn zwei mit einer erfindungsgemäßen Zusammensetzung beschichteten und getrockneten Oberflächen, wenn sie bei Temperaturen kleiner 40°C, insbesondere kleiner 30 °C bzw. kleiner 25 °C, insbesondere bei Raumtemperatur (20°C) unter Ausübung von Druck in Kontakt gebracht werden, aneinander haften. Vorzugsweise beträgt die Haftung (Autoadhäsionshaftung) nach Siegelung mit 1,4 bar bei 20°C mindestens 2 N/15 mm, gemessen nach der in den Beispielen beschriebenen Methode zur Bestimmung der Siegelnahtfestigkeit Bei der praktischen Anwendung erfolgt die Kaltsiegelung zweckmäßigerweise bei Umgebungstemperatur, also im Allgemeinen bei Temperaturen von 10 bis 30 °C, insbesondere 15 bis 25 °C und bei Drucken von wenigen Millibar bis zu mehreren Bar über Normaldruck (1 bar), z.B. bei 0,01 bis 5 bar, insbesondere von 0,1 bis 3 bar über Normaldruck. Die Siegelzeit, d.h. die Zeit während der der Druck aufrecht erhalten wird, beträgt z.B. 0,1 bis 20 Sekunden, insbesondere 0,1 bis 3 Sekunden, üblich sind insbesondere 0,5 Sekunden.

Wiederverschließbar bedeutet, dass wenn zwei Verschlussabschnitte einer Verpackung nach dem Öffnen bei Raumtemperatur (20°C) unter Ausübung von schwachem Druck in Kontakt gebracht werden, aneinander haften. Vorzugsweise beträgt die Wiederverschlusshaftung nach mindestens fünfmaligem Öffnen und Wiederverschließen bei 20°C mindestens 0,5 N/15 mm, gemessen nach der in den Beispielen beschriebenen Methode zur Bestimmung der Wiederverschlussfestigkeit.

Die erfindungsgemäßen Polymerdispersionen bilden nach Aufbringen auf ein Substrat und nach Trocknen eine Beschichtung, die vorzugsweise autoadhäsiv und gegenüber Polyamidoberflächen blockfest ist. Autoadhäsiv bedeutet, dass zwei beschichtete Oberflächen gegeneinander kaltsiegelbar sind. Vorzugsweise beträgt die Autoadhäsionshaftung der Klebstoffschicht nach Kaltsiegelung mit 1,4 bar bei 20°C mindestens 2 N/15 mm. Blockfest bedeutet, dass die Haftung einer mit einer erfindungsgemäßen Zusammensetzung beschichteten und getrockneten Oberfläche, d.h. die Haftung einer nichtgesiegelten Klebstoffschicht gegenüber einer Polyamidoberfläche nach Belastung einer kreisförmigen Oberfläche mit Durchmesser von 10 cm mit 10 Tonnen für einen Tag bei 20°C höchstens 0,1 N/25 mm beträgt, gemessen nach der in den Beispielen beschriebenen Methode.

Bevorzugte Verpackungen, beschichtete Folien bzw. Zusammensetzungen haben bzw. bewirken eine Erstöffnungskraft (Siegelnahtfestigkeit) von mindestens 2 N/15mm, eine Blockfestigkeit der Kaltsiegelbeschichtung gegen Polyamid-Releaselack von maximal 0,1 N/25 mm und eine Wiederverschlussfestigkeit nach fünfmaligem Wiederverschluss von mindestens 0,5 N/15mm, jeweils gemessen nach den in den Beispielen beschriebenen Methoden.

Bei den erfindungsgemäßen Polymerdispersionen handelt es sich um Dispersionen von Polymeren in wässrigem Medium. Hierbei kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Die Zusammensetzung kann für die erfindungsgemäße Verwendung allein aus dem in Wasser dispergierten Polymer und dem Schutzkolloid bestehen. Sie kann aber auch noch weitere Zusatzstoffe enthalten, z.B. Füllstoffe, Antiblockmittel, Farbstoffe, Verlaufsmittel, oder Verdicker.

Vorzugsweise sind die erfindungsgemäßen Polymerdispersionen emulgatorarm, d.h. sie enthalten Emulgatoren (der Polymerisationsmischung zugesetzte, nicht-polymere, amphiphile, oberflächenaktive Substanzen) in einer Menge von vorzugsweise weniger als 3 oder weniger als 1 Gew.%. Besonders bevorzugt sind emulgatorfreie Systeme. In einer Ausführungsform der Erfindung erfolgt daher die in Gegenwart des Schutzkolloids durchgeführte Emulsionspolymerisation emulgatorfrei, d.h. ohne Zusatz von Emulgatoren.

Im Folgenden wird die Bezeichnung "(Meth)acryl..." und ähnliche Bezeichnungen als abkürzende Schreibweise verwendet für "Acryl... oder Methacryl...".

Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht der Schutzkolloide liegt vorzugsweise oberhalb von 1000 g/mol, insbesondere oberhalb von 2000 g/mol und bevorzugt bis zu 50000 g/mol oder bis zu 10000 g/mol. beispielsweise von 1000 bis 100000 g/mol, von 1000 bis 10000 g/mol oder von 2000 bis 10000 g/mol.

Die Schutzkolloide werden vorzugsweise in einer Menge von 0,5 bis 60 Gew.-Teilen oder von 1 bis 30 Gew.-Teilen, besonders bevorzugt von 7 bis 30 Gew.% (insbesondere wenn der Gesamtfeststoffgehalt der erfindungsgemäßen Zusammensetzung mehr als 50 Gew.% beträgt), bezogen auf 100 Gew.-Teile der zu polymerisierenden Monomeren verwendet. Eine ausführliche Beschreibung von Schutzkolloiden findet man in Houben-Weyl, Methoden der organischen Chemie, Band XIV/1, Makromolekulare Stoffe, Georg-Thieme-Verlag, Stuttgart, 1961, Seiten 411 bis 420. Als Schutzkolloide in Betracht kommen z. B. amphiphile Polymere, also Polymere mit hydrophoben und hydrophilen Gruppen. Es kann sich um natürliche Polymere, wie Stärke oder um synthetische Polymere handeln.

Das Schutzkolloid wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Schutzkolloid kann darüber hinaus optional aus weiteren, vorzugsweise nichtionischen Monomeren gebildet sein. Das Schutzkolloid ist vorzugsweise zu mindestens 40 Gew.-%, insbesondere von 40 bis 80 Gew.% oder von 50 bis 80 Gew.% aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren.

Hauptmonomere für das Schutzkolloid sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Schutzkolloid bevorzugt sind die C₁- bis C₁₀-Alkylacrylate und -methacrylate, insbesondere C₁- bis C₈-Alkylacrylate und -methacrylate und Vinylaromaten, insbesondere Styrol und alpha-Methylstyrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol, alpha-Methylstyrol sowie Mischungen dieser Monomere.

Das Schutzkolloid ist weiterhin vorzugsweise zu mindestens 15 Gew.%, insbesondere von 15 bis 60 Gew.% oder von 20 bis 50 Gew.% aus ethylenisch ungesättigten Säuremonomeren aufgebaut. Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure. Die Säuremonomere können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

In einer bevorzugten Ausführungsform handelt es sich um ein Schutzkolloid, welches
(i) in einer Menge von 7 bis 30 Gew.%, bezogen auf 100 Gew.-Teile der zu polymerisierenden Monomeren, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

Der als Bindemittel fungierende Wirkstoff der Klebstoffschicht ist das durch Emulsionspolymerisation von radikalisch polymerisierbaren Monomeren herstellbare Emulsionspolymerisat, im folgenden Klebstoffpolymer genannt. Das Klebstoffpolymer besteht vorzugsweise zu mindestens 60 Gew.-%, bevorzugt zu mindestens 80 Gew.-%, z.B. von 80 bis 100 Gew.%, besonders bevorzugt zu mindestens 90 Gew.-% oder zu 100 Gew.% aus einem oder mehreren der nachfolgend beschriebenen Hauptmonomeren. Die Hauptmonomeren sind ausgewählt aus der Gruppe bestehend aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für das Klebstoffpolymer bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat, Styrol sowie Mischungen dieser Monomere.

Neben den Hauptmonomeren kann das Klebstoffpolymer weitere Monomere enthalten, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere C₁-C₁₀-Hydroxyalkyl(meth)acrylate sowie (Meth)acrylamid. Als weitere Monomere seien darüber hinaus Phenyloxyethylglykol-mono-(meth-)acrylat, Glycidylacrylat, Glycidylmethacrylat, Amino-(meth-)acrylate wie 2-Aminoethyl-(meth)acrylat genannt. Als weitere Monomere seien auch vernetzende Monomere genannt.

Vorzugsweise ist das Klebstoffpolymer bzw. das durch Emulsionspolymerisation hergestellte Emulsionspolymerisat aber frei von Säuregruppen.

Insbesondere ist das Klebstoffpolymer zu mindestens 60 Gew.-%, besonders bevorzugt zu mindestens 80 Gew.-%, z.B. von 60 bis 100 Gew.%, und ganz besonders bevorzugt zu mindestens 95 Gew.-% oder zu 100 Gew.% aus mindestens einem C₁ bis C₂₀ Alkylacrylat, mindestens einem C₁ bis C₂₀ Alkylmethacrylat, deren Gemisch oder deren Gemisch mit Styrol aufgebaut. In einer Ausführungsform handelt es sich bei dem Bindemittel um das Homopolymer von Ethylacrylat.

Das Klebstoffpolymer, bzw. das in Gegenwart mindestens eines Schutzkolloids hergestellte Emulsionspolymerisat hat eine Glasübergangstemperatur von -30 bis 0°C, vorzugsweise von -28 bis -5 °C. Die Glasübergangstemperatur lässt sich bestimmen durch Differential Scanning Calorimetrie (ASTM D 3418-08, sogenannte "midpoint temperature").

Die Herstellung der Polymere kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Erfindungsgemäß können ein oder mehrere der oben genannten Schutzkolloide als einziges Dispergiermittel eingesetzt werden, d.h. ohne einen Zusatz von Emulgatoren. Falls gewünscht, können aber auch geringe Mengen an Emulgatoren mitverwendet werden. Vorzugsweise erfolgt die Emulsionspolymerisation in Gegenwart mindestens eines Schutzkolloids ohne Zusatz eines nicht-polymeren Emulgators.

Falls Emulgatoren als zusätzliche grenzflächenaktive Substanzen eingesetzt werden, so handelt es sich vorzugsweise um anionische oder nichtionische Emulgatoren. Geeignete Emulgatoren sind beispielsweise ethoxylierte C₈- bis C₃₆- oder C₁₂- bis C₁₈-Fettalkohole mit einem Ethoxylierungsgrad von 3 bis 50 oder von 4 bis 30, ethoxylierte Mono-, Di- und Tri- C₄- bis C₁₂- oder C₄- bis C₉-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C8-C22-Alkylgruppe. Weitere geeignete Emulgatoren sind Verbindungen der allgemeinen Formel 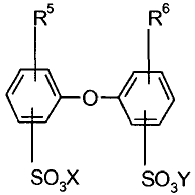 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol^{®} VSL, Emulphor^{®} NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Die Emulsionspolymerisation wird in Gegenwart mindestens eines Schutzkolloids durchgeführt. Das bedeutet, dass die Schutzkolloide vorgelegt oder zusammen mit Monomeren dem Polymerisationsgefäß zugeführt werden. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Regler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Weiterhin können Regler ohne Thiolgruppe verwendet werden, wie z.B. Terpinolen. In einer bevorzugten Ausführungsform ist das Emulsionspolymerisat hergestellt unter Verwendung von 0,05 bis 0,5 Gew.%, bezogen auf die Monomermenge, an mindestens einem Molekulargewichtsregler.

In einer Ausführungsform der Erfindung handelt es sich um eine Zusammensetzung, wobei das durch Emulsionspolymerisation hergestellte Emulsionspolymerisat ein Reinacrylat oder ein Styrolacrylat ist, d.h. ausschließlich aus Alkyl(meth)acrylat-Monomeren oder aus einer Kombination von Alkyl(meth)acrylat-Monomeren und Styrol besteht, wobei die Alkylgruppe vorzugsweise 1 bis 8 C-Atome aufweist und wobei vorzugsweise mindestens ein Monomer Ethylacrylat oder n-Butylacrylat ist.

In einer Ausführungsform der Erfindung handelt es sich um eine wiederverschließbare Verpackung, wobei das für die Kaltsiegelung eingesetzte, durch Emulsionspolymerisation in Gegenwart eines Schutzkolloids hergestellte Emulsionspolymerisat eine Glasübergangstemperatur von -30 bis 0 °C aufweist und zu 100% aus Monomeren gebildet ist, welche ausgewählt sind aus Acrylsäureestern, Methacrylsäureestern, Styrol und deren Gemisch, und das Schutzkolloid
(i) in einer Menge von 7 bis 30 Gew.%, bezogen auf die Menge des Emulsionspolymerisats, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Styrol, alpha-Methylstyrol und deren Gemisch,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

Gegenstand der Erfindung ist auch eine Zusammensetzung in Form einer wässrigen Polymerdispersion, wobei die wässrige Polymerdispersion geeignet ist zur Herstellung kaltsiegelbarer, wiederverschließbarer Verpackungsmaterialien und wobei die Polymerdispersion herstellbar ist durch Emulsionspolymerisation von radikalisch polymerisierbaren Monomeren in Gegenwart von mindestens einem Schutzkolloid, wobei das durch Emulsionspolymerisation hergestellte Emulsionspolymerisat eine Glasübergangstemperatur von -30 bis 0 °C aufweist und zu 100% aus Monomeren gebildet ist, welche ausgewählt sind aus Acrylsäureestern, Methacrylsäureestern, Styrol und deren Gemisch, und das Schutzkolloid
(i) in einer Menge von 7 bis 30 Gew.%, bezogen auf die Menge des Emulsionspolymerisats, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Styrol, alpha-Methylstyrol und deren Gemisch,
(iii) zu mindestens 15 Gew.% aus Säuremonomeren aufgebaut ist, welche ausgewählt sind aus Acrylsäure, Methacrylsäure und deren Gemisch und
(iv) ein zahlenmittleres Molekulargewicht von 1000 bis 10000 aufweist.

Mit dieser Zusammensetzung wird die erfindungsgemäße Verpackung bevorzugt hergestellt. Die Polymerdispersion dieser Zusammensetzung bildet nach Aufbringen auf ein Substrat und nach Trocknen eine bei Raumtemperatur autoadhäsive und gegenüber Polyamidoberflächen blockfeste Beschichtung.

Gegenstand der Erfindung ist auch die Verwendung der oben beschriebenen, wässrigen Polymerdispersionen zur Herstellung einer kaltsiegelbaren, nach dem erstmaligen Öffnen wiederverschließbaren Verpackung. Die Polymerdispersion bildet nach Aufbringen auf ein Substrat und nach Trocknen eine bei Raumtemperatur blockfeste, autoadhäsive Beschichtung.

Die erfindungsgemäße Zusammensetzung eignet sich zum Kaltsiegeln von zwei beliebigen Substraten, wobei,
- die beiden Substrate an den Stellen, die verklebt werden sollen, jeweils mit der erfindungsgemäßen Zusammensetzung beschichtet sind oder beschichtet werden und
- die beiden Substrate gegebenenfalls unter Ausübung von Druck in Kontakt gebracht werden und die Temperatur in der beschichteten Zusammensetzung kleiner 40°C ist (Kaltversiegelung, siehe oben).

Als zu verklebende Substrate kommen beliebige in Betracht, z. B. Substrate aus Holz, Metall, Papier oder Kunststoff, die in beliebiger Kombination miteinander verklebt werden können, wobei vorzugsweise mindestens ein Substrat eine Polymerfolie ist. Die Substrate werden dazu mit der erfindungsgemäßen Zusammensetzung beschichtet.

Die Beschichtung kann in üblicher Weise wie z.B. durch Bedrucken, insbesondere durch Flexodruck oder durch Tiefdruck (Gravurdruck) erfolgen. Übliche Schichtdicken (nach Trocknung) sind z.B. 1 bis 30 g/m², vorzugsweise 1 bis 10 g/m² oder 1 bis 5 g/m². Insbesondere eignet sich die erfindungsgemäße Zusammensetzung zur Herstellung von Verpackungen. In Betracht kommen dabei Verpackungen aus beliebigen Materialien, z. B. aus Papier oder vorzugsweise aus Kunststoff. Genannt seien z. B. Verpackungen aus Polymerfolien, gegebenenfalls auch metallisierten Polymerfolien, z. B. aus Polyethylen, Polypropylen, PVC, Polyester, Polyacetat.

Zur Herstellung von Verpackungen ist insbesondere ein beidseitig beschichteter Träger geeignet, wobei der Träger auf der einen Seite (im nachfolgenden als Vorderseite bezeichnet) eine äußere Schicht der erfindungsgemäßen Zusammensetzung aufweist und auf der anderen Seite (im nachfolgenden als Rückseite bezeichnet) eine äußere Releasebeschichtung aufweist. Der Träger kann z. B. aus einer der oben genannten Polymerfolien, bzw. metallisierten Polymerfolien bestehen, genannt seien insbesondere Folien aus orientiertem Polypropylen, Polyethylen, vorzugsweise high density Polyethylen oder Polyethylenterephthalat. Die Polymerfolien können auch Corona vorbehandelt sein. Die erfindungsgemäße Zusammensetzung kann direkt auf die Vorderseite des Trägers beschichtet sein, zwischen dem Träger und der erfindungsgemäßen Zusammensetzung können sich jedoch auch noch andere Schichten befinden, z. B. Primerschichten, Barriereschichten oder farbige oder schwarz-weiße Druckfarbenschichten, wobei Druckfarbenschichten sich aber vorzugsweise auf der Rückseite des Trägers befinden. Wesentlich ist, dass sich die Schicht der erfindungsgemäßen Zusammensetzung außen befindet.

Die Releasebeschichtung kann aus einem beliebigen Material sein, es kann sich um eine Polymerfolie, z.B. eine Folie aus orientiertem Polypropylen, die aufkaschiert oder coextrudiert wird, oder um einen flüssigen Lack, z. B. ein Polyamidlack, der aufgetragen und verfilmt wird, handeln; wesentlich ist, dass die auf der Vorderseite des Trägers aufgebrachte Klebstoffschicht (im vorliegenden Fall die erfindungsgemäße Zusammensetzung) nicht auf der Releasebeschichtung haftet (Blockfestigkeit). Der Träger wird im Allgemeinen aufgerollt und später von der Rolle verarbeitet. Beim Aufrollen kommen die Vorderseite und die Rückseite des Trägers in direkten Kontakt. Ein Haften der Vorderseite auf der Rückseite würde den Träger unbrauchbar machen. Zwischen der Releasebeschichtung und dem Träger können sich weitere Schichten befinden; in Betracht kommen wiederum Schichten eines Primers, der die Haftung verbessert und Druckfarbenschichten. Die äußere Releasebeschichtung hat auch die Aufgabe, die unteren Schichten, insbesondere die Druckfarbenschicht gegen äußere Einwirkungen zu schützen.

Bevorzugte Träger sind wie folgt aufgebaut, wobei die Reihenfolge der Schichten der räumlichen Anordnung entspricht:
Klebstoffschicht (erfindungsgemäße Zusammensetzung)
Träger
Gegebenenfalls Primerschicht
Gegebenenfalls Druckfarbenschicht
Releasebeschichtung.

Der beidseitig beschichtete Träger wird insbesondere zur Herstellung von Verpackungen verwendet, vorzugsweise wird er dazu mit sich selbst durch Kaltversiegelung verklebt, wobei jeweils die mit der äußeren, erfindungsgemäßen Zusammensetzung beschichteten Vorderseiten in Kontakt gebracht werden. Wesentlich ist dabei, dass beide zu verklebenden Träger an den zu verklebenden, die spätere Siegelnaht bildenden Stellen mit der erfindungsgemäßen Zusammensetzung beschichtet sind. Die Verpackung wird durch Kaltversiegelung der Klebstoffschicht miteinander verschlossen, sobald das zu verpackende Gut eingefüllt ist. Die Verpackungen eignen sich insbesondere für Lebensmittel.

Bei der erfindungsgemäßen, kaltgesiegelten, wiederverschließbare Verpackung ist die Kaltversiegelung vorzugsweise zwischen einem ersten und einem zweiten Verschlussabschnitt ausgebildet ist, wobei die Bindungskraft der Kaltversiegelung am ersten und zweiten Abschnitt größer als die Bindungskraft innerhalb der Kaltversiegelung ist, sodass die Kaltversiegelung getrennt wird und teilweise am ersten und teilweise am zweiten Verschlussabschnitt anhaftet, wenn der Verschluss geöffnet wird, d.h. beim Öffnen der Verpackung kommt es zu einem Kohäsionsbruch der Siegelschicht.

Bei der Herstellung der Verpackung wird die für die Kaltversiegelung verwendete Zusammensetzung vorzugsweise in einer Menge von 2 bis 5 g/m² (bezogen auf Feststoff) auf jedem Verschlussabschnitt aufgebracht.

Die Verschlusskräfte der erfindungsgemäßen Verpackung sind vorzugsweise derart, dass die anfängliche Öffnungskraft mindestens 2 N/15 mm, vorzugsweise 2,5 bis 5 N/15 mm beträgt, gemessen nach der in den Beispielen beschriebenen Methode. Die Öffnungskräfte für einen oder mehrere Wiederverschlussvorgänge beträgt vorzugsweise mindestens 0,5 N/15 mm, vorzugsweise 0,5 bis 2 N/15mm oder 1 bis 1,5 N/15 mm, gemessen nach der in den Beispielen beschriebenen Methode.

Gegenstand der Erfindung ist auch eine beschichtete Polymerfolie, wobei eine Polymerträgerfolie zumindest teilweise, d.h. zumindest an den die spätere Siegelnaht bildenden Bereichen mit einer erfindungsgemäßen Zusammensetzung beschichtet ist. Vorzugsweise weist die erfindungsgemäße Polymerfolie eine erste und eine zweite Seite auf, wobei die erste Seite als äußere Schicht zumindest teilweise mit einer erfindungsgemäßen Zusammensetzung beschichtet ist und die zweite Seite als äußere Schicht eine Releasebeschichtung aufweist. In einer Ausführungsform besteht die Polymerträgerfolie der erfindungsgemäßen beschichteten Polymerfolie aus Polyethylen oder orientiertem Polypropylen und die Releasebeschichtung wird auf Basis von Polyamid gebildet.

Gegenstand der Erfindung ist auch die Verwendung der erfindungsgemäßen, beschichteten Polymerfolie zur Herstellung von Verpackungen, insbesondere von Folienverpackungen für Lebensmittel.

Gegenstand der Erfindung ist auch ein Verfahren zur Herstellung einer wiederverschließbaren, kaltgesiegelten Verpackung, wobei eine erfindungsgemäße, oben näher beschriebene Zusammensetzung in Form einer wässrigen Polymerdispersion auf ein Verpackungssubstrat aufgebracht, getrocknet und kaltgesiegelt wird.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Es wurden die folgenden Einsatzstoffe verwendet:
Oppalyte® 33MW247: für Kaltsiegelanwendungen empfohlener Film aus oberflächenbehandeltem, biaxial orientierten Polypropylen der Firma Exxon Mobil Corp.
Treofan® SHD40: für Kaltsiegelanwendungen empfohlener Film aus orientiertem Polypropylen der Firma Treofan GmbH & Co. KG
Gecko® Coldseal Release Lack 70 GL 282547: Polyamid-Releaselack auf Lösemittelbasis der Firma Huber Group

### Kaltsiegelprüfung

### Beschichtung mit Polyamid Release-Lack

Mit einem 0,07mm Drahtrakel wird Gecko® Coldseal Release Lack 70 GL 282547 auf die vorbehandelte Seite der OPP-Folie SHD40 aufgetragen und 10 Sek. mit Heißluft getrocknet. Auftragsmenge Release-Lack ca. 1,0g/m².

### Beschichtung der OPP-Folie

Mit dem Balkenrakel wird der Kleber auf die vorbehandelte Seite der OPP-Folie Oppalyte ® 33MW247 aufgetragen und 1 Min. bei 70°C getrocknet. Die beschichtete Folie wird mit einer mit Release-Lack beschichteten OPP-Folie abgedeckt.

### Siegelnahtfestigkeit (SNF)

Aus der beschichteten Folie werden 15mm breite Streifen geschnitten und am Siegelgerät werden jeweils zwei Streifen gegeneinander (Klebstoff gegen Klebstoff) 0,5 Sek. mit 200N (1,4bar) gesiegelt. 30 Sekunden nach der Siegelung werden mit einer Abzugsgeschwindigkeit von 50 mm/min die Schälfestigkeiten in N/15mm bestimmt.

### Blocktest

Die beschichtete Folie wird gegen die mit Release-Lack beschichtete Seite einer OPP-Folie SHD40 gelegt und ein kreisförmiger Ausschnitt mit einem Durchmesser von 10 cm wird einen Tag lang mit 10 Tonnen belastet. Danach werden die Schälfestigkeiten von 25 mm breiten Streifen mit einer Abzugsgeschwindigkeit von 800 mm/min in N/25mm bestimmt.

### Wiederverschlussfestigkeit

Die Prüfkörper werden so hergestellt wie für die Prüfung der Siegelnahtfestigkeit und ebenfalls gegeneinander gesiegelt. Anschließend wird die Siegelung fünfmal von Hand geöffnet und wieder verschlossen. Zum Verschließen wird jeweils mit einer 2 kg schweren Handrolle einmal vor und einmal zurück über die Siegelung gerollt. Die dann bestimmte Siegelnahtfestigkeit ist die Wiederverschlussfestigkeit nach fünfmaligem Verschließen.

Alle Prüfungen erfolgen bei Raumtemperatur (20°C).

### Beispiel B1

Poly(ethylacrylat), hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 4000, hergestellt aus 44 Gew.-Teilen Acrylsäure und 56 Gew.-Teilen n-Butylacrylat. Glasübergangstemperatur: -25 °C.

### Beispiel B2

Poly(ethylacrylat), hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 9000, hergestellt aus 32 Gew.-Teilen Acrylsäure, 24 Gew.-Teilen Styrol, 33 Gew.-Teilen alpha-Methylstyrol, 5 Gew.-Teilen Ethylhexylacrylat und 5 Gew.-Teilen Isooctylacrylat. Glasübergangstemperatur: -25 °C.

### Beispiel B3

Poly(ethylacrylat), hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 9200, hergestellt aus 33 Gew.-Teilen Acrylsäure, 32 Gew.-Teilen Styrol, 30 Gew.-Teilen alpha-Methylstyrol und 5 Gew.-Teilen Isooctylacrylat.
Glasübergangstemperatur: -25 °C.

### Beispiel B4

Copolymer aus 70 Gew.-Teilen n-Butylacrylat und 30 Gew.-Teilen Styrol, hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 4000, hergestellt aus 44 Gew.-Teilen Acrylsäure und 56 Gew.-Teilen n-Butylacrylat.
Glasübergangstemperatur: -15 °C.

### Beispiel B5

Wie Beispiel B1, ohne t-Dodecylmercaptan.

### Vergleichsbeispiel V1

Handelsüblicher Naturkautschuk-Latex
NK-Latex der Firma Eukalin, Feststoffgehalt 55%

### Vergleichsbeispiel V2

Copolymer aus 70 Gew.-Teilen Ethylacrylat und 30 Gew.-Teilen Styrol, hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 4000, hergestellt aus 44 Gew.-Teilen Acrylsäure und 56 Gew.-Teilen n-Butylacrylat.
Glasübergangstemperatur: +5 °C.

### Vergleichsbeispiel V3

Copolymer aus 44 Gew.-Teilen Ethylacrylat und 56 Gew.-Teilen n-Butylacrylat, hergestellt durch Emulsionspolymerisation in Gegenwart von 0,2 Gew.-Teilen (bezogen auf 100 Gew.-Teile Monomer) an t-Dodecylmercaptan sowie in Gegenwart eines Schutzkolloids mit einem zahlenmittleren Molekulargewicht von 4000, hergestellt aus 44 Gew.-Teilen Acrylsäure und 56 Gew.-Teilen n-Butylacrylat.
Glasübergangstemperatur: -36 °C.

### Vergleichsbeispiel V4

Wie Beispiel B1, hergestellt durch Emulsionspolymerisation in Gegenwart von Emulgatoren, ohne Schutzkolloid.

Die Ergebnisse der Kaltsiegelprüfungen sind in Tabelle 1 dargestellt.

**Tabelle 1: Ergebnisse der Kaltsiegelprüfungen**

| | Siegelnahtfestigkeit [N/15 mm] | Blockfestigkeit gegen Releasebeschichtung [N/25 mm] | Wiederverschlussfestigkeit nach 5maligem Wiederverschluss [N/15 mm] |
|---|---|---|---|
| B1 | 4,0 | 0,05 | 1,0 |
| B2 | 2,6 | 0,06 | 0,9 |
| B3 | 3,0 | 0,05 | 1,0 |
| B4 | 2,3 | 0,1 | 0,8 |
| B5 | 3,0 | 0,06 | 1,0 |
| V1 | 2,0 | 0,0 | 0,0 |
| V2 | 0,7 | 0,0 | 0,0 |
| V3 | 0,7 | 0,43 | 0,5 |
| V4 | 0,8 | 0,07 | 0,4 |

Die erfindungsgemäßen Zusammensetzungen B1 bis B5 zeichnen sich gegenüber den Vergleichszusammensetzungen V1 bis V4 durch eine unerwartete Kombination vorteilhafter Eigenschaften aus hinsichtlich einer hohen Siegelnahtfestigkeit von mehr als 2 N/15 mm, einer guten Blockfestigkeit von maximal 0,1 N/25 mm sowie einer hohen Wiederverschlussfestigkeit von mehr als 0,5 N/15 mm.

## Patentansprüche

1. Wiederverschließbare Verpackung mit einer kaltgesiegelten, nach Öffnen der Verpackung wiederverschließbaren Klebstoffschicht, wobei die Klebstoffschicht ein Emulsionspolymerisat enthält, welches zu mindestens 60 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren, wobei das Emulsionspolymerisat herstellbar ist durch Emulsionspolymerisation von radikalisch polymerisierbaren Monomeren in Gegenwart mindestens eines Schutzkolloids und eine Glasübergangstemperatur im Bereich von -30 bis 0 °C aufweist.

2. Wiederverschließbare Verpackung nach dem vorhergehenden Anspruch, **dadurch gekennzeichnet, dass** das durch Emulsionspolymerisation hergestellte Emulsionspolymerisat frei von Säuregruppen ist.

3. Wiederverschließbare Verpackung nach einem der vorhergehenden Ansprüche, **dadurch gekennzeichnet, dass** das durch Emulsionspolymerisation hergestellte Emulsionspolymerisat zu 60 bis 100 Gew.% aus mindestens einem C, bis C₂₀ Alkylacrylat, mindestens einem C₁ bis C₂₀ Alkylmethacrylat, deren Gemisch oder deren Gemisch mit Styrol aufgebaut ist.

4. Wiederverschließbare Verpackung nach einem der vorhergehenden Ansprüche, **dadurch gekennzeichnet, dass** die Kaltversiegelung zwischen einem ersten und einem zweiten Verschlussabschnitt ausgebildet ist, wobei die Bindungskraft der Kaltversiegelung am ersten und zweiten Abschnitt größer als die Bindungskraft innerhalb der Kaltversiegelung ist, sodass die Kaltversiegelung getrennt wird und teilweise am ersten und teilweise am zweiten Verschlussabschnitt anhaftet, wenn der Verschluss geöffnet wird.

5. Wiederverschließbare Verpackung nach einem der vorhergehenden Ansprüche, **dadurch gekennzeichnet, dass** die Verpackung eine anfängliche Öffnungskraft von mindestens 2 N/15 mm sowie Öffnungskräfte für einen oder mehrere Wiederverschlussvorgänge von mindestens 0,5 N/15 mm aufweist.

6. Wiederverschließbare Verpackung nach einem der vorhergehenden Ansprüche, **dadurch gekennzeichnet, dass** die Kaltversiegelung in einer Menge von 2 bis 5 g/m² auf jedem Verschlussabschnitt aufgebracht ist.

7. Wiederverschließbare Verpackung nach einem der vorhergehenden Ansprüche, **dadurch gekennzeichnet, dass** das Schutzkolloid
(i) in einer Menge von 7 bis 30 Gew.%, bezogen auf 100 Gew.-Teile der zu polymerisierenden Monomeren, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

8. Wiederverschließbare Verpackung nach einem der vorhergehenden Ansprüche, **dadurch gekennzeichnet, dass** das Emulsionspolymerisat hergestellt ist unter Verwendung von 0,05 bis 0,5 Gew.%, bezogen auf die Monomermenge, an mindestens einem Molekulargewichtsregler.

9. Wiederverschließbare Verpackung nach einem der vorhergehenden Ansprüche, **dadurch gekennzeichnet, dass** die Autoadhäsionshaftung der Klebstoffschicht nach Kaltsiegelung mit 1,4 bar bei 20°C mindestens 2 N/15 mm beträgt und die Haftung der nichtgesiegelten Klebstoffschicht gegenüber einer Polyamidoberfläche nach Belastung einer kreisförmigen Oberfläche mit Durchmesser von 10 cm mit 10 Tonnen für einen Tag bei 20°C höchstens 0,1 N/25 mm beträgt.

10. Wiederverschließbare Verpackung nach einem der vorhergehenden Ansprüche, **dadurch gekennzeichnet, dass** das durch Emulsionspolymerisation hergestellte Emulsionspolymerisat eine Glasübergangstemperatur von -30 bis 0 °C aufweist und zu 100% aus Monomeren gebildet ist, welche ausgewählt sind aus Acrylsäureestern, Methacrylsäureestern, Styrol und deren Gemisch, und das Schutzkolloid
(i) in einer Menge von 7 bis 30 Gew.%, bezogen auf die Menge des Emulsionspolymerisats, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Styrol, alpha-Methylstyrol und deren Gemisch,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

11. Wiederverschließbare Verpackung nach einem der vorhergehenden Ansprüche, **dadurch gekennzeichnet, dass** die Emulsionspolymerisation in Gegenwart des Schutzkolloids ohne Zusatz eines nicht-polymeren Emulgators erfolgt.

12. Zusammensetzung in Form einer wässrigen Polymerdispersion, wobei die wässrige Polymerdispersion geeignet ist zur Herstellung kaltsiegelbarer, wiederverschließbarer Verpackungsmaterialien und wobei die Polymerdispersion herstellbar ist durch Emulsionspolymerisation von radikalisch polymerisierbaren Monomeren in Gegenwart von mindestens einem Schutzkolloid, wobei das durch Emulsionspolymerisation hergestellte Emulsionspolymerisat eine Glasübergangstemperatur von -30 bis 0 °C aufweist und zu 100% aus Monomeren gebildet ist, welche ausgewählt sind aus Acrylsäureestern, Methacrylsäureestern, Styrol und deren Gemisch, und das Schutzkolloid
(i) in einer Menge von 7 bis 30 Gew.%, bezogen auf die Menge des Emulsionspolymerisats, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Styrol, alpha-Methylstyrol und deren Gemisch,
(iii) zu mindestens 15 Gew.% aus Säuremonomeren aufgebaut ist, welche ausgewählt sind aus Acrylsäure, Methacrylsäure und deren Gemisch und
(iv) ein zahlenmittleres Molekulargewicht von 1000 bis 10000 aufweist,
**dadurch gekennzeichnet, dass** die Polymerdispersion nach Aufbringen auf ein Substrat und nach Trocknen eine bei Raumtemperatur autoadhäsive und gegenüber Polyamidoberflächen blockfeste Beschichtung bildet.

13. Beschichtete Polymerfolie, **dadurch gekennzeichnet, dass** eine Polymerträgerfolie zumindest teilweise mit einer Zusammensetzung gemäß Anspruch 12 beschichtet ist.

14. Beschichtete Polymerfolie nach dem vorhergehenden Anspruch, **dadurch gekennzeichnet, dass** die Polymerfolie eine erste und eine zweite Seite aufweist, wobei die erste Seite als äußere Schicht zumindest teilweise mit einer Zusammensetzung gemäß Anspruch 12 beschichtet ist und die zweite Seite als äußere Schicht eine Releasebeschichtung aufweist.

15. Beschichtete Polymerfolie nach einem der beiden vorhergehenden Ansprüche, **dadurch gekennzeichnet, dass** die Polymerträgerfolie aus Polyethylen oder orientiertem Polypropylen besteht und die Releasebeschichtung auf Basis von Polyamid gebildet wird.

16. Verwendung einer wässrigen Polymerdispersion zur Herstellung einer kaltsiegelbaren, nach dem erstmaligen Öffnen wiederverschließbaren Verpackung, wobei die Polymerdispersion ein in Wasser dispergiertes Emulsionspolymerisats enthält, welches zu mindestens 60 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethem von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren, wobei das Emulsionspolymerisat herstellbar ist durch Emulsionspolymerisation von radikalisch polymerisierbaren Monomeren in Gegenwart mindestens eines Schutzkolloids und eine Glasübergangstemperatur im Bereich von -30 bis 0 °C aufweist.

17. Verwendung nach dem vorhergehenden Anspruch, **dadurch gekennzeichnet, dass** die Polymerdispersion nach Aufbringen auf ein Substrat und nach Trocknen eine bei Raumtemperatur blockfeste, autoadhäsive Beschichtung bildet.

18. Verwendung nach einem der beiden vorhergehenden Ansprüche, **dadurch gekennzeichnet, dass** es sich bei dem Substrat um eine Polymerfolie handelt.

19. Verfahren zur Herstellung einer wiederverschließbaren, kaltgesiegelten Verpackung, wobei eine Zusammensetzung in Form einer wässrigen Polymerdispersion auf ein Verpackungssubstrat aufgebracht, getrocknet und kaltgesiegelt wird und wobei die Zusammensetzung ein Emulsionspolymerisat enthält, welches zu mindestens 60 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren, wobei das Emulsionspolymerisat herstellbar ist durch Emulsionspolymerisation von radikalisch polymerisierbaren Monomeren in Gegenwart mindestens eines Schutzkolloids und eine Glasübergangstemperatur im Bereich von -30 bis 0 °C aufweist.

## Claims

1. A recloseable pack having a cold-sealed layer of adhesive which is recloseable after the pack has been opened, the layer of adhesive comprising an emulsion polymer composed to an extent of at least 60% by weight of principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers, the emulsion polymer being preparable by emulsion polymerization of free-radically polymerizable monomers in the presence of at least one protective colloid and having a glass transition temperature in the range from -30 to 0°C.

2. The recloseable pack according to the preceding claim, wherein the emulsion polymer prepared by emulsion polymerization is free from acid groups.

3. The recloseable pack according to either of the preceding claims, wherein the emulsion polymer prepared by emulsion polymerization is composed to an extent of 60% to 100% by weight of at least one C₁ to C₂₀ alkyl acrylate, at least one C₁ to C₂₀ alkyl methacrylate, a mixture thereof, or a mixture thereof with styrene.

4. The recloseable pack according to any of the preceding claims, wherein the cold seal is formed between a first and a second closure section, the bonding force of the cold seal to the first and second sections being greater than the bonding force within the cold seal, so that the cold seal is parted and bonds partly to the first and partly to the second closure section when the closure is opened.

5. The recloseable pack according to any of the preceding claims, wherein the pack features an initial opening force of at least 2 N/15 mm and also opening forces for one or more reclosing operations of at least 0.5 N/15 mm.

6. The recloseable pack according to any of the preceding claims, wherein the cold seal is applied in an amount of 2 to 5 g/m² to each closure section.

7. The recloseable pack according to any of the preceding claims, wherein the protective colloid
(i) is used in an amount of 7% to 30% by weight, based on 100 parts by weight of the monomers to be polymerized,
(ii) is composed to an extent of at least 40% by weight of principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers,
(iii)is composed to an extent of at least 15% by weight of ethylenically unsaturated acid monomers preferably selected from acrylic acid, methacrylic acid, and a mixture thereof, and
(iv) has a number-average molecular weight of 1000 to 10 000.

8. The recloseable pack according to any of the preceding claims, wherein the emulsion polymer is prepared using 0.05% to 0.5% by weight, based on the monomer amount, of at least one molecular weight regulator.

9. The recloseable pack according to any of the preceding claims, wherein the autoadhesion of the layer of adhesive after cold sealing at 20°C and 1.4 bar is at least 2 N/15 mm and the adhesion of the unsealed layer of adhesive with respect to a polyamide surface after loading of a circular surface with a diameter of 10 cm with 10 tonnes for one day at 20°C is not more than 0.1 N/25 mm.

10. The recloseable pack according to any of the preceding claims, wherein the emulsion polymer prepared by emulsion polymerization has a glass transition temperature of -30 to 0°C and is formed 100% of monomers selected from acrylic esters, methacrylic esters, styrene, and a mixture thereof, and the protective colloid
(i) is used in an amount of 7% to 30% by weight, based on the amount of the emulsion polymer,
(ii) is composed to an extent of at least 40% by weight of principal monomers selected from the group consisting of C1 to C20 alkyl (meth)acrylates, styrene, alpha-methylstyrene, and a mixture thereof,
(iii)is composed to an extent of at least 15% by weight of ethylenically unsaturated acid monomers preferably selected from acrylic acid, methacrylic acid, and a mixture thereof, and (iv) has a number-average molecular weight of 1000 to 10 000.

11. The recloseable pack according to any of the preceding claims, wherein the emulsion polymerization takes place in the presence of the protective colloid without addition of a nonpolymeric emulsifier.

12. A composition in the form of an aqueous polymer dispersion, the aqueous polymer dispersion being suitable for producing cold-sealable, recloseable packaging materials, and the polymer dispersion being preparable by emulsion polymerization of free-radically polymerizable monomers in the presence of at least one protective colloid, where the emulsion polymer prepared by emulsion polymerization has a glass transition temperature of -30 to 0°C and is formed 100% of monomers selected from acrylic esters, methacrylic esters, styrene, and a mixture thereof, and the protective colloid
(i) is used in an amount of 7% to 30% by weight, based on the amount of the emulsion polymer,
(ii) is composed to an extent of at least 40% by weight of principal monomers selected from the group consisting of C1 to C20 alkyl (meth)acrylates, styrene, alpha-methylstyrene, and a mixture thereof,
(iii)is composed to an extent of at least 15% by weight of ethylenically unsaturated acid monomers preferably selected from acrylic acid, methacrylic acid, and a mixture thereof, and
(iv) has a number-average molecular weight of 1000 to 10 000, wherein the polymer dispersion, following application to a substrate and following drying, forms a coating which at room temperature is autoadhesive and is blocking-resistant with respect to polyamide surfaces.

13. A coated polymer film wherein a polymer carrier film is at least partly coated with a composition according to claim 12.

14. The coated polymer film according to the preceding claim, wherein the polymer film has a first side and a second side, the first side being coated, as an outer layer, at least partly with a composition according to claim 12, and the second side having, as an outer layer, a release coating.

15. The coated polymer film according to either of the two preceding claims, wherein the polymer carrier film is composed of polyethylene or oriented polypropylene and the release coating is formed on the basis of polyamide.

16. The use of an aqueous polymer dispersion for producing a cold-sealable pack which is recloseable after initial opening, the polymer dispersion comprising a water-dispersed emulsion polymer which is composed to an extent of at least 60% by weight of principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers, the emulsion polymer being preparable by emulsion polymerization of free-radically polymerizable monomers in the presence of at least one protective colloid and having a glass transition temperature in the range from -30 to 0°C.

17. The use according to the preceding claim, wherein the polymer dispersion, following application to a substrate and following drying, forms a coating which at room temperature is blocking-resistant and is autoadhesive.

18. The use according to either of the two preceding claims, wherein the substrate is a polymer film.

19. A method for producing a recloseable, cold-sealed pack, where a composition in the form of an aqueous polymer dispersion is applied to a packaging substrate, dried, and cold-sealed, the composition comprising an emulsion polymer which is composed to an extent of at least 60% by weight of principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers, the emulsion polymer being preparable by emulsion polymerization of free-radically polymerizable monomers in the presence of at least one protective colloid and having a glass transition temperature in the range from -30 to 0°C.

## Revendications

1. Emballage refermable présentant une couche d'adhésif scellée à froid, refermable après ouverture de l'emballage, la couche d'adhésif contenant un polymère en émulsion, qui est constitué à raison d'au moins 60% en poids de monomères principaux, qui sont choisis dans le groupe constitué par les (méth)acrylates de C₁-C₂₀-alkyle, les esters de vinyle d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères, le polymère en émulsion pouvant être préparé par polymérisation en émulsion de monomères polymérisables par voie radicalaire en présence d'au moins un colloïde de protection et présentant une température de transition vitreuse dans la plage de -30 à 0°C.

2. Emballage refermable selon la revendication précédente, **caractérisé en ce que** le polymère en émulsion préparé par polymérisation en émulsion est exempt de groupes acides.

3. Emballage refermable selon l'une quelconque des revendications précédentes, **caractérisé en ce que** le polymère en émulsion préparé par polymérisation en émulsion est constitué à raison de 60 à 100% en poids d'au moins un acrylate de C₁-C₂₀-alkyle, d'au moins un méthacrylate de C₁-C₂₀-alkyle, leur mélange ou leur mélange avec du styrène.

4. Emballage refermable selon l'une quelconque des revendications précédentes, **caractérisé en ce que** le scellage à froid est réalisé entre une première section de fermeture et une deuxième section de fermeture, la force de liaison du scellage à froid au niveau de la première et de la deuxième section étant supérieure à la force de liaison dans le scellage à froid, de telle sorte que le scellage à froid est séparé et adhère partiellement à la première section et partiellement à la deuxième section de fermeture lorsque la fermeture est ouverte.

5. Emballage refermable selon l'une quelconque des revendications précédentes, **caractérisé en ce que** l'emballage présente une force d'ouverture de départ d'au moins 2 N/15 mm ainsi que des forces d'ouverture pour un ou plusieurs processus de refermeture d'au moins 0,5 N/15 mm.

6. Emballage refermable selon l'une quelconque des revendications précédentes, **caractérisé en ce que** le scellage à froid est appliqué en une quantité de 2 à 5 g/m² sur chaque section de fermeture.

7. Emballage refermable selon l'une quelconque des revendications précédentes, **caractérisé en ce que** le colloïde de protection
(i) est utilisé en une quantité de 7 à 30% en poids, par rapport à 100 parties en poids des monomères à polymériser,
(ii) est constitué, à raison d'au moins 40% en poids, de monomères principaux, qui sont choisis dans le groupe constitué par les (méth)acrylates de C₁-C₂₀-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et des mélanges de ces monomères,
(iii) est constitué, à raison d'au moins 15% en poids, de monomères acides éthyléniquement insaturés, qui sont de préférence choisis parmi l'acide acrylique, l'acide méthacrylique et leur mélange et
(iv) présente un poids moléculaire numérique moyen de 1000 à 10 000 g/mole.

8. Emballage refermable selon l'une quelconque des revendications précédentes, **caractérisé en ce que** le polymère en émulsion est préparé en utilisant 0,05 à 0,5% en poids, par rapport à la quantité de monomères, d'au moins un régulateur du poids moléculaire.

9. Emballage refermable selon l'une quelconque des revendications précédentes, **caractérisé en ce que** l'autoadhésivité de la couche d'adhésif après le scellage à froid à 1,4 bar et à 20°C est d'au moins 2 N/15 mm et l'adhésivité de la couche d'adhésif non scellée par rapport à une surface de polyamide après sollicitation d'une surface circulaire d'un diamètre de 10 cm par 10 tonnes pendant un jour à 20°C est d'au plus 0,1 N/25 mm.

10. Emballage refermable selon l'une quelconque des revendications précédentes, **caractérisé en ce que** le polymère en émulsion préparé par une polymérisation en émulsion présente une température de transition vitreuse de -30 à 0°C et est formé à raison de 100% de monomères qui sont choisis parmi les esters de l'acide acrylique, les esters de l'acide méthacrylique, le styrène et leur mélange et le colloïde de protection
(i) est utilisé en une quantité de 7 à 30% en poids, par rapport à la quantité du polymère en émulsion,
(ii) est constitué, à raison d'au moins 40 % en poids, de monomères principaux, qui sont choisis dans le groupe constitué par les (méth)acrylates de C₁-C₂₀-alkyle, le styrène, l'alpha-méthylstyrène et leur mélange,
(iii) est constitué, à raison d'au moins 15% en poids, de monomères acides éthyléniquement insaturés, qui sont de préférence choisis parmi l'acide acrylique, l'acide méthacrylique et leur mélange et
(iv) présente un poids moléculaire numérique moyen de 1000 à 10 000 g/mole.

11. Emballage refermable selon l'une quelconque des revendications précédentes, **caractérisé en ce que** la polymérisation en émulsion a lieu en présence du colloïde de protection sans addition d'un émulsifiant non polymère.

12. Composition sous forme d'une dispersion polymère aqueuse, la dispersion polymère aqueuse convenant pour la préparation de matériaux d'emballage scellables à froid, refermables et la dispersion polymère pouvant être préparée par polymérisation en émulsion de monomères polymérisables par voie radicalaire en présence d'au moins un colloïde de protection, le polymère en émulsion préparé par une polymérisation en émulsion présentant une température de transition vitreuse de -30 à 0°C et étant constitué à raison de 100% de monomères qui sont choisis parmi les esters de l'acide acrylique, les esters de l'acide méthacrylique, le styrène et leur mélange, et le colloïde de protection
(i) est utilisé en une quantité de 7 à 30% en poids, par rapport à la quantité du polymère en émulsion,
(ii) est constitué, à raison d'au moins 40 % en poids, de monomères principaux, qui sont choisis dans le groupe constitué par les (méth)acrylates de C₁-C₂₀-alkyle, le styrène, l'alpha-méthylstyrène et leur mélange,
(iii) est constitué, à raison d'au moins 15% en poids, de monomères acides qui sont choisis parmi l'acide acrylique, l'acide méthacrylique et leur mélange et
(iv) présente un poids moléculaire numérique moyen de 1000 à 10 000 g/mole, **caractérisée en ce que** la dispersion polymère, après l'application sur un substrat et après séchage, forme un revêtement autoadhésif à température ambiante et antiadhésif par rapport aux surfaces en polyamide.

13. Feuille polymère revêtue, **caractérisée en ce qu'**une feuille support polymère est revêtue au moins partiellement par une composition selon la revendication 12.

14. Feuille polymère revêtue selon la revendication précédente, **caractérisée en ce que** la feuille polymère présente une première et une deuxième face, la première face étant revêtue, en tant que couche externe, au moins partiellement par une composition selon la revendication 12 et la deuxième face présentant comme couche externe un revêtement antiadhésif.

15. Feuille polymère revêtue selon l'une quelconque des deux revendications précédentes, **caractérisée en ce que** la feuille support polymère est en polyéthylène ou en polypropylène orienté et le revêtement antiadhésif est formé à base de polyamide.

16. Utilisation d'une dispersion polymère pour la fabrication d'un emballage scellable à froid, refermable après une première ouverture, la dispersion polymère contenant un polymère en émulsion dispersé dans l'eau, qui est constitué à raison d'au moins 60% en poids de monomères principaux, qui sont choisis dans le groupe constitué par les (méth)acrylates de C₁-C₂₀-alkyle, les esters de vinyle d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères, le polymère en émulsion pouvant être préparé par polymérisation en émulsion de monomères polymérisables par voie radicalaire en présence d'au moins un colloïde de protection et présentant une température de transition vitreuse dans la plage de -30 à 0°C.

17. Utilisation selon la revendication précédente, **caractérisée en ce que** la dispersion polymère, après l'application sur un substrat et après séchage, forme un revêtement autoadhésif et antiadhésif à température ambiante.

18. Utilisation selon l'une quelconque des deux revendications précédentes, **caractérisée en ce qu'**il s'agit, pour le substrat, d'une feuille polymère.

19. Procédé pour la fabrication d'un emballage refermable, scellé à froid, une composition étant appliquée sous forme d'une dispersion polymère aqueuse sur un substrat d'emballage, séchée et scellée à froid et la composition contenant un polymère en émulsion, qui est constitué à raison d'au moins 60% en poids de monomères principaux, qui sont choisis dans le groupe constitué par les (méth)acrylates de C₁-C₂₀-alkyle, les esters de vinyle d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères, le polymère en émulsion pouvant être préparé par polymérisation en émulsion de monomères polymérisables par voie radicalaire en présence d'au moins un colloïde de protection et présentant une température de transition vitreuse dans la plage de -30 à 0°C.
